# EUROPÄISCHE PATENTSCHRIFT

(11) **EP 0 872 330 B1**
(45) Veröffentlichungstag und Bekanntmachung des Hinweises auf die Patenterteilung: **29.01.2003**
(21) Anmeldenummer: 98106526.1
(22) Anmeldetag: 09.04.1998
(51) Int. Cl.: B29C 59/04, B29D 7/01

(54) **Textilähnliche Kunststoffolie und deren Herstellungsverfahren**
Cloth-like plastic film and its manufacturing process
Feuille en matière plastique présentant un aspect textile et procédé pour sa fabrication

(30) Priorität: 15.04.1997 DE 19715656
(43) Veröffentlichungstag der Anmeldung: 21.10.1998
(73) Patentinhaber: 4P Folie Forchheim GmbH, 91301 Forchheim (DE)
(72) Erfinder: Reiser, Rolf, Dr., 91301 Forchheim (DE); Springer, Kurt, 91301 Forchheim (DE)
(74) Vertreter: Hutzelmann, Gerhard

(56) Entgegenhaltungen:
- EP-A- 0 256 803
- EP-A- 0 743 163
- WO-A-91/12125
- US-A- 3 484 835
- US-A- 4 259 285
- US-A- 4 376 147
- US-A- 4 546 029
- US-A- 4 810 451
- US-A- 5 229 186
- US-A- 5 427 838
- US-A- 5 518 801

## Beschreibung

Die Erfindung bezieht sich auf eine Kunststoffolie, insbesondere Polyolefinfolie, die mit einer Prägestruktur mit zwei Prägemustern versehen ist, die sich gegenseitig überlagern und von denen das eine Prägemuster weitgehend einer Leinenstruktur entspricht, während das zweite Prägemuster feiner ausgebildet ist als das erste Prägemuster und der Folienoberfläche ein mattes Aussehen verleiht, wobei das erste, grobere Prägemuster eine regelmäßige Linien- oder unterbrochene Linienprägung und das zweite, feinere Prägemuster eine Rautenstruktur aufweist.

Kunststoffolien sollen, besonders für den Einsatz als Windelfolie ein textilähnliches Aussehen aufweisen, trotzdem aber die günstigen Eigenschaften der Kunststoffolie beibehalten.

Aus der US-A-4 376 147 ist bereits eine Kunststoffolie gemäß dem Oberbegriff des Anspruchs 1 bekannt, bei der parallel zu einer Folienkante verlaufende erste Prägelinien und zu diesen senkrecht verlaufende zweite Prägelinien vorgesehen sind. US-A-4 376 147 offenbart weiter ein Verfahren gemäß dem Oberbegriff des Anspruchs 2.

Die WO 91/12125 zeigt und beschreibt eine Kunststoffolie mit mehreren Prägungen.

Aus der EP-A-0 743 163 ist ein Verfahren und eine Kunststoffolie bekannt, bei der Prägungen mittels zweier Prägezylinder durchgeführt werden.

Auch die US-A 4 810 451 betrifft ein Verfahren zum Prägen von Kunststoffolie.

Hiervon ausgehend liegt der Erfindung die Aufgabe zugrunde, eine Kunststoffolie auf rationelle Weise so zu behandeln, daß sie ein textilähnliches Aussehen hat.

Diese Aufgabe wird gemäß dem Kennzeichnenden Teil des Anspruchs 1 dadurch gelöst, daß die Kunststoffolie eine Stärke von 20 bis 25 µm aufweist und beide Prägemuster auf einer gemeinsamen Oberfläche der Kunststoffolie angeordnet sind und eine Prägetiefe von 50 bis 100 µm, vorzugsweise von 50 bis 60 µm aufweisen.

Erst durch diese Kombination konnte der gewünschte Effekt erzielt werden, durch welchen eine Folie erzielt, die einen stoffähnlichen Charakter aufweist und so sehr vorteilhaft als Windelfolie eingesetzt werden kann.

Durch diese erfindungsgemäßen Maßnahmen ist die Folie visuell kaum von einem textilen Flächengebilde zu unterscheiden.

Die Erfindung nach Anspruch 2 betrifft ein Verfahren zum Herstellen einer Kunststoffolie, insbesondere Polyolefinfolie erwiesen, wobei die Folie eine Prägestruktur mit zwei Prägemustern aufweist, die sich gegenseitig überlagern und von denen das eine Prägemuster weitgehend einer Leinenstruktur entspricht, während das zweite Prägemuster feiner ausgebildet ist als das erste Prägemuster und der Folienoberfläche ein mattes Aussehen verleiht, wobei das erste, grobere Prägemuster eine regelmäßige Linien- oder unterbrochene Linienprägung und das zweite, feinere Prägemuster eine Rautenstruktur aufweist wobei in einem ersten Schritt wird die Kunststoffolie hergestellt wird und in einem zweiten Schritt gleichzeitig beide Prägemuster in eine Oberfläche der Kunststoffolie eingebracht werden, dadurch gekennzeichnet daß die Kunststoffolie in ersten Schritt in einer Stärke von 20 bis 25 µm hergestellt wird und die beide Prägemuster ein Prägetiefe von 50 bis 100 µm vorzugsweise von 50 bis 60 µm aufweisen.

Mit diesem Verfahren wird die Kunststoffolie mit textilem Erscheinungsbild in rationeller Weise hergestellt.

Zum Herstellen der erfindungsgemäßen Windelfolie wird zu erst eine Polyolefinfolie mit einer Dicke von 20 bis 25 µm produziert, die anschließend geprägt wird. Beide Prägemuster, nämlich ein verhältnismäßig grobes Prägemuster mit Leinenstruktur und ein feineres Prägemuster mit einer Rautenstruktur werden gleichzeitig in die Folie eingebracht. Beide Prägemuster haben eine Prägetiefe von etwa 50 bis 60 µm. Das feinere Prägemuster kann auch mit Hilfe einer Prägewalze erzeugt werden, deren Oberfläche eine Keramikbeschichtung aufweist.

## Patentansprüche

1. Kunststoffolie, insbesondere Polyolefinfolie, die mit einer Prägestruktur mit zwei Prägemustern versehen ist, die sich gegenseitig überlagern und von denen das eine Prägemuster weitgehend einer Leinenstruktur entspricht, während das zweite Prägemuster feiner ausgebildet ist als das erste Prägemuster und der Folienoberfläche ein mattes Aussehen verleiht, wobei das erste, grobere Prägemuster eine regelmäßige Linien- oder unterbrochene Linienprägung und das zweite, feinere Prägemuster eine Rautenstruktur aufweist, **dadurch gekennzeichnet, daß** die Kunststoffolie eine Stärke von 20 bis 25 µm aufweist und beide Prägemuster auf einer gemeinsamen Oberfläche der Kunststoffolie angeordnet sind und eine Prägetiefe von 50 bis 100 µm, vorzugsweise von 50 bis 60 µm aufweisen.

2. Verfahren zum Herstellen einer Kunststoffolie, insbesondere Polyolefinfolie, die eine Prägestruktur mit zwei Prägemustern aufweist, die sich gegenseitig überlagern und von denen das eine Prägemuster weitgehend einer Leinenstruktur entspricht, während das zweite Prägemuster feiner ausgebildet ist als das erste Prägemuster und der Folienoberfläche ein mattes Aussehen verleiht, wobei das erste, grobere Prägemuster eine regelmäßige Linien- oder unterbrochene Linienprägung und das zweite, feinere Prägemuster eine Rautenstruktur aufweist, wobei in einem ersten Schritt die Kunststoffolie hergestellt wird und in einem zweiten Schritt gleichzeitig beide Prägemuster in eine Oberfläche der Kunststoffolie eingebracht werden **dadurch gekennzeichnet, daß** die Kunststoffolie im ersten schritt in einer stärke von 20 bis 25 µm hergestellt wird und die beiden Prägemuster eine Prägetiefe von 50 bis 100 µm, vorzugsweise von 50 bis 60 µm aufweisen.

## Revendications

1. Feuille en matière plastique, notamment feuille en polyoléfine, qui est munie d'une structure de gaufrage à deux motifs superposés et dont l'un des motifs de gaufrage correspond dans une large mesure à une structure "toile", tandis que le second motif de gaufrage est plus fin que le premier et confère à la surface de la feuille un aspect mat, sachant que le premier motif de gaufrage plus grossier présente un gaufrage en lignes régulier ou interrompu et le second motif de gaufrage plus fin, une structure rhombique, **caractérisée en ce que** la feuille en matière plastique présente une épaisseur comprise entre 20 et 25 µm et **en ce que** les deux motifs de gaufrage sont situés sur une surface commune de la feuille en matière plastique et présentent une profondeur comprise entre 50 et 100 µm, de préférence entre 50 et 60 µm.

2. Procédé pour fabriquer une feuille en matière plastique, notamment une feuille en polyoléfine, qui est munie d'une structure de gaufrage à deux motifs superposés et dont l'un des motifs de gaufrage correspond dans une large mesure à une structure "toile", tandis que le second motif de gaufrage est plus fin que le premier et confère à la surface de la feuille un aspect mat, sachant que le premier motif de gaufrage plus grossier présente un gaufrage en lignes régulier ou interrompu et le second motif de gaufrage plus fin, une structure rhombique, sachant que, au cours d'une première étape, on fabrique la feuille en matière plastique et, dans une deuxième étape, on imprime les deux motifs de gaufrage dans une surface de la feuille en matière plastique, **caractérisé en ce que** la feuille en matière plastique est fabriquée au cours de la première étape avec une épaisseur comprise entre 20 et 25 µm et **en ce que** les deux motifs de gaufrage présentent une profondeur de 50 à 100 µm, de préférence de 50 à 60 µm.

## Claims

1. Plastic film, in particular a polyolefin film, that is provided with an embossed surface with two superimposed embossing patterns, one of these embossing patterns resembling linen to a large extent, while the second embossing pattern is finer than the first embossing pattern and gives the film surface a matt appearance, where the first, coarser embossing pattern has regular lines or interrupted lines and the second, finer embossing pattern has a diamond shape, **wherein** the plastic film is 20 to 25 µ thick and both embossing patterns are located on a common surface of the plastic film and have an embossing depth of 50 to 100 µ and preferably of 50 to 60 µ.

2. Process for the production of a plastic film, in particular a polyolefin film, which has an embossed surface with two superimposed embossing patterns, one of these embossing patterns resembling linen to a large extent, while the second embossing pattern is finer than the first embossing pattern and gives the film surface a matt appearance, where the first, coarser embossing pattern has regular lines or interrupted lines and the second, finer embossing pattern has a diamond shape, where the plastic film is produced in a first stage and both embossing patterns are embossed in one surface of the plastic film at the same time in a second stage, **wherein** the plastic film is produced in a thickness of 20 to 25 µ in the first stage and the two embossing patterns have an embossing depth of 50 to 100 µ and preferably of 50 to 60 µ.
